Europäisches Patentamt

European Patent Office

Office européen des brevets

(11) Veröffentlichungsnummer: **0 272 565 B1**

(12) # EUROPÄISCHE PATENTSCHRIFT

(45) Veröffentlichungstag der Patentschrift: **29.03.95**

(21) Anmeldenummer: **87118443.8**

(22) Anmeldetag: **12.12.87**

(51) Int. Cl.6: **C09B 47/04**, C07D 487/22, C09D 7/12, G03G 5/06, G11B 7/24, //(C07D487/22, 259:00,209:00,209:00,209:00, 209:00)

(54) **Mono- und disubstituierte Phthalocyanine.**

(30) Priorität: **20.12.86 DE 3643770**

(43) Veröffentlichungstag der Anmeldung:
**29.06.88 Patentblatt 88/26**

(45) Bekanntmachung des Hinweises auf die Patenterteilung:
**29.03.95 Patentblatt 95/13**

(84) Benannte Vertragsstaaten:
**BE DE FR GB IT NL**

(56) Entgegenhaltungen:
**FR-A- 1 566 824**
**US-A- 4 458 004**
**US-A- 4 529 688**

**PATENT ABSTRACTS OF JAPAN, Band 7, Nr. 70 (P-185)[1215], 23. März 1983, Seite49 P 185; & JP-A-57 212 636 (RICOH K.K.) 27-12-1982**

(73) Patentinhaber: **BASF Aktiengesellschaft**
**Carl-Bosch-Strasse 38**
**D-67063 Ludwigshafen (DE)**

(72) Erfinder: **Albert, Bernhard, Dr.**
**Rietburgstrasse 13**
**D-6701 Maxdorf (DE)**
Erfinder: **Kuppelmaier, Harald, Dr.**
**Kuehler Grund 30 a**
**D-6900 Heidelberg (DE)**
Erfinder: **Wagenblast, Gerhard, Dr.**
**Hanns-Fay-Strasse 3**
**D-6710 Frankenthal (DE)**

**Beschreibung**

Die Erfindung betrifft metallhaltige oder metallfreie, mono- und disubstituierte Phthalocyanine, welche einen oder zwei der folgenden Reste R als Substituent an ihren Benzolkernen aufweisen:

R = Cyan, $C_5$-$C_{20}$-Alkyl, $C_5$-$C_{10}$-Cycloalkyl, fluoriertes $C_1$-$C_6$-ALKyl, $C_6$-$C_{20}$-Aryl;

XR$^1$,

worin

X Sauerstoff, Schwefel, Seien, Tellur oder NH und

R$^1$ $C_1$-$C_6$-Alkyl, fluoriertes $C_1$-$C_6$-Alkyl oder $C_6$-$C_{20}$-Aryl bedeutet;

wobei ein jeder substituierter Benzolkern stets nur mit einem Rest R substituiert ist.

Außerdem betrifft die Erfindung die Verwendung der Phthalocyanine für die Herstellung flächenförmiger, mehrschichtiger, laseroptischer Aufzeichnungsmaterialien. Des weiteren betrifft die Erfindung neue flächenförmige, mehrschichtige, laseroptische Aufzeichnungsmaterialien, deren Aufzeichnungsschichten die obengenannten Phthalocyanine oder solche, bei denen R für -Si(R$^2$)$_3$ (R$^2$:$C_1$-$C_6$-Alkyl) steht, enthalten. Zudem betrifft die Erfindung ein neues, verbessertes Verfahren zur laseroptischen Datenaufzeichnung, bei dem man diese Aufzeichnungsmaterialien verwendet.

Unter IR-lesbaren Streifencodes sind beispielsweise die auf Warenverpackungen angebrachten Streifencodes zu verstehen, welche der genauen Kennzeichnung der Waren dienen.

Unter Flüssigkristallanzeigen oder "Displays" werden die bekannten Anordnungen verstanden, weiche Schichten aus flüssig-kristallinen Stoffen enthalten. Diese Schichten ändern bei Anlegen einer elektrischen Spannung lokal ihre optischen Eigenschaften, wodurch z.B. Zahlen, Buchstaben oder Bilder sichtbar dargestellt (angezeigt) werden können.

Unter IR-Sicherheitssystemen werden Anordnungen verstanden, weiche im wesentlichen aus einer Laserlichtquelle und einem geeigneten, räumlich weiter davon entfernten Detektor bestehen. Der von der Laserlichtquelle ausgestandte Laserstrahl trifft dabei auf den Detektor auf und bildet eine sogenannte Lichtschranke. Wird diese unterbrochen, so wird über den Detektor ein Alarm ausgelöst.

Elektrophotographische Aufzeichnungsmaterialien enthalten im wesentlichen Schichten, welche in der Dunkelheit einen hohen elektrischen Widerstand aufweisen, wohingegen sie bei Belichtung leitfähig werden. Werden solche Schichten in der Dunkelheit an ihrer Oberfläche elektrostatisch aufgeladen und anschließend bildmäßig belichtet, so wird die elektrostatische Ladung in den belichteten Bereichen abgeleitet und es entsteht ein elektrostatisches Bild, welches mit Hilfe sogenannter Toner sichtbar gemacht werden kann.

Laseroptische Aufzeichnungsmaterialien enthalten im wesentlichen eine Aufzeichnungsschicht, deren physikalische Eigenschaften durch Bestrahlen mit einem fokussierten Laserstrahl thermisch lokal geändert werden kann. Die thermisch veränderten Bereiche der Aufzeichnungsschicht stellen die eingeschriebenen Daten dar.

Diese Bereiche können die Form von Löchern haben, welche die Aufzeichnungsschicht ganz durchdringen. In diesem Fall spricht man allgemein von ablativer laseroptischer Datenaufzeichnung. Beim Auslesen der Daten mit einem Leselaserstrahl wird die unterschiedliche Reflektivität der Löcher und der unveränderten Bereiche der Aufzeichnungsschicht ausgenutzt. Um hierbei eine hohe Empfindlichkeit und ein hohes Signal-Rausch-Verhältnis zu erzielen, kann eine Reflektorschicht mitverwendet werden, die durch die Lochbildung freigelegt wird und den Leselaserstrahl besonders stark reflektiert.

Die thermisch veränderten Bereiche können auch die Form von Kratern (pits) haben, welche gegebenenfalls einen sauber ausgebildeten Kraterrand (wall) aufweisen. In diesem Falle spricht man von deformativer laseroptischer Datenaufzeichnung. Hierbei werden die Daten über die Beugung des Lichts des Leselaserstrahls an den Kratern ausgelesen.

Durch die thermische Veränderung können indes auch Bereiche entstehen, in denen keine Ablation oder Deformation, sondern eine Phasenumwandlung des Materials der Aufzeichnungsschicht in eine andere Stoffmodifikation stattgefunden hat. In einem solchen Falle spricht man von laseroptischer Datenaufzeichnung durch Phasenumwandlung. Im allgemeinen wird durch die Phasenumwandlung die Reflektivität in den beschriebenen Bereichen erniedrigt und/oder die Lichtdurchlässigkeit erhöht. Indessen kann es unter Umständen auch zum gegenteiligen Effekt kommen, d.h. die Reflektivität wird erhöht und/oder die Lichtdurchlässigkeit erniedrigt. Im folgenden werden die in dieser Weise thermisch veränderten Bereiche als Flecke (spots) bezeichnet.

Im Rahmen der vorliegenden Erfindung umfaßt der Begriff "flächenförmig" alle Raumformen, deren Dicke erheblich kleiner ist als ihre Länge und Breite. Demnach handelt es sich hier um band-, platten- oder schreibenförmige Aufzeichnungsmaterialien, wobei die scheibenförmigen im allgemeinen auch als Datenplatten bezeichnet werden.

Durch den Begriff "mehrschichtig" wird darauf hingewiesen, daß die Aufzeichnungsmaterialien außer der Aufzeichnungsschicht noch mindestens eine weitere Schicht enthalten, welche gleichfalls für die Funktion der Materialien von Bedeutung ist.

Mono- und disubstituierte Phthalocyanine, welche als Substituenten tert.-Butylgruppen (vgl. die US-A-4 492 750 und die US-A-4 529 688), Fluoratome (vgl. die US-A-4 458 004), Chloratome (vgl. die DE-A-29 51 340) oder Chlor-, Brom- oder Iodatome (vgl. die JP-A-57/212 636, Patent Abstracts of Japan, Band 7, Nr. 70, 23.03.83, Seite 49 P 185) enthalten, sind bekannt.

Solche Phthalocyanine werden indes nur für die ablative oder deformative laseroptische Datenaufzeichnung verwendet. Die ablative Datenaufzeichnung erfordert ihrem Wesen nach die Mitverwendung einer Reflektorschicht, welche den Leselaserstrahl stark reflektiert, um ein hohes Signal-Rausch-Verhältnis zu erzielen. Die deformative Datenaufzeichnung erfordert dagegen eine genaue Einstellung der Schichtdicke der Aufzeichnungsschicht und der Form der Krater, um günstige Bedingungen für die Beugung des Leselaserstrahls zu erhalten. Auch hierbei kann die Mitverwendung einer Reflektorschicht erforderlich werden, um eine hohe Empfindlichkeit und ein hohes Signal-Rausch-Verhältnis zu erzielen.

Die laseroptische Datenaufzeichnung durch Phasenumwandlung von Aufzeichnungsschichten aus unsubstituiertem und metallfreiem Phthalocyanin oder unsubstituiertem Kupfer-, Kobalt- und Chloroaluminiumphthalocyanin ist aus der JP-A-60/154098 (vgl. Chem. Abstracts, Band 104, Heft 4, Referat Nr. 26842s, 1986) bekannt. Hierbei verwendet man Aufzeichnungsschichten aus Phthalocyaninen der $\alpha$-Modifikation, welche durch die Bestrahlung mit Laserlicht der Wellenlänge $\lambda$ = 632,4 nm (Schreibwellenlänge), einer Lichtleistung von 5 mW und mit einer Impulsdauer mit 20 ns lokal in die $\beta$-Modifikation umgewandelt werden.

Dadurch erniedrigt sich die Durchlässigkeit der Schichten für Laserlicht der Wellenlänge $\lambda'$ = 714 nm (Lesewellenlänge) von 30 auf 5 %. Die Empfindlichkeit und das Signal-Rausch-Verhältnis solcher Aufzeichnungsmaterialien genügt indes nicht hohen Ansprüchen; insbesondere läßt der Reflektivitätskontrast, d.h. der Unterschied in der Reflektivität der beschriebenen ($\beta$-Modifikation) und der unbeschriebenen Bereiche ($\alpha$-Modifikation) bei Lesewellenlängen $\lambda'$ von über 714 nm zu wünschen übrig. Außerdem lassen sich solche Aufzeichnungsschichten bei Schreibwellenlangen $\lambda$ von über 632,4 nm nur noch schlecht mit Daten beschreiben.

Der Erfindung liegt die Aufgabe zugrunde, die bekannten Phthalocyanine durch neue mono- und disubstituierte Phthalocyanine mit verbesserten anwendungstechnischen Eigenschaften zu ersetzen.

Der Erfindung liegt außerdem die Aufgabe zugrunde, neue, flächenförmige, mehrschichtige, laseroptische Aufzeichnungsmaterialien mit thermisch veränderbaren Aufzeichnungsschichten zu finden, welche sich außer für die ablative und deformative Datenaufzeichnung auch noch für die Datenaufzeichnung durch Phasenumwandlung eignen, wobei die letztere - insbesondere im IR-Bereich - eine höhere Empfindlichkeit aufweisen soll als der Stand der Technik, so daß hierzu die handelsüblichen Halbleiterlaser verwendet werden können.

Zudem liegt der Erfindung die Aufgabe zugrunde, ein Verfahren zur laseroptischen Datenaufzeichnung zu finden, bei welchem die thermisch veränderbare, Farbstoffe enthaltende Aufzeichnungsschicht eines flächenförmigen, mehrschichtigen Aufzeichnungsmaterials mittels eines Schreiblaserstrahls mit digitalen oder analogen Daten in Form von thermisch veränderten Bereichen beschrieben wird, wonach die eingeschriebenen Daten mittels eines Leselaserstrahls gelesen werden, wobei man das von den Aufzeichnungsmaterial transmittierte oder reflektierte Licht erfaßt, und welches sich insbesondere für das Beschreiben und Lesen im IR-Bereich mittels handelsüblicher Halbleiterlaser eignet.

Demgemäß wurden die eingangs definierten Phthalocyanine gefunden.

Des weiteren wurden flächenförmige, mehrschichtige, laseroptische Aufzeichnungsmaterialien gefunden, welche thermisch veränderbare Aufzeichnungsschichten aufweisen, die diese Phthalocyanine oder solche, bei denen R für -Si(R$^2$)$_3$ (R$^2$:C$_1$-C$_6$-Alkyl) steht, enthalten.

Außerdem wurde ein Verfahren zur laseroptischen Datenaufzeichnung gefunden, bei welchem die thermisch veränderbare, Farbstoffe enthaltende Aufzeichnungsschicht eines flächenförmigen, mehrschichtigen Aufzeichnungsmaterials mittels eines Schreiblaserstrahls mit digitalen oder analogen Daten in Form von thermisch veränderten Bereichen beschrieben wird, wonach die eingeschriebenen Daten mittels eines Leselaserstrahls gelesen werden, wobei man das von dem Aufzeichnungsmaterial transmittierte oder reflektierte Licht erfaßt, und welches dadurch gekennzeichnet ist, daß man hierzu eines dieser Aufzeichnungsmaterialien verwendet.

Die erfindungsgemäßen bzw. erfindungsgemäß zu verwendenden (im folgenden umfaßt "erfindungsgemäß" beide Gruppen) Phthalocyanine sind durch die Reste R mono- oder disubstituiert. Sind sie disubstituiert, so sind die Reste R in einem Molekül im allgemeinen aufgrund der Herstellweise gleich; es kommen aber auch unterschiedliche Reste R in einem Molekül in Betracht.

Die Phthalocyanine können auch als Gemische aus mono- und disubstituierten Phthalocyaninen vorliegen, wobei in beiden entweder die gleichen oder unterschiedliche Reste R vorhanden sind. Dabei können die Gemische eine beliebige Zusammensetzung haben, so daß die Zahl von Resten R pro Phthalocyanin-Grundgerüst rechnerisch zwischen 1 und 2, vorzugsweise 1,01 und 1,99 und insbesondere 1,1 und 1,9 liegen kann.

Erfindungsgemäß geeignete Reste R sind Cyanreste; $C_5$-$C_{20}$-Akylreste wie der Pentyl-, Hexyl-, n-Octyl-, 1,1,3,3-Tetramethylbutyl-, Decyl-, Dodecyl-, Pentadecyl- oder der Eicosanylrest; $C_5$-$C_{10}$-Cycloalkylreste wie der Cyclopentyl-, Cyclohexyl- oder der Methylcyclohexylrest; fluorierte $C_1$-$C_6$-Alkylreste wie der Trifluormethyl-, 2,2,2-Trifluorethyl-, Pentafluorethyl-, Heptafluorpropyl-, Perfluorbutyl-, Perfluorpentyl- oder der Perfluorhexylrest; $C_6$-$C_{20}$-Arylreste wie der Phenyl-, p-Tolyl- oder der Naphthylrest; $XR^1$-Reste, worin X ein Sauerstoff-, Schwefel-, Selen- oder Telluratom oder eine NH-Gruppe und $R^1$ einen $C_1$-$C_6$-Alkylrest wie einen Methyl-, Ethyl-, i- oder n-Propyl-, n-, i- oder tert.-Butyl-, Pentyl-, Hexyl-, n-Octyl- oder einen 1,1,3,3-Tetramethylbutylrest oder einen der vorstehend genannten fluorierten $C_1$-$C_6$-Alkyl- oder die vorstehend genannten $C_6$-$C_{20}$-Arylreste bezeichnet; oder $Si(R^2)_3$-Reste, worin $R^2$ einen Methyl- oder Ethylrest bezeichnet.

Erfindungsgemäß bevorzugte Reste R sind Methyl-, Ethyl-, 2,2,2-Trifluorethyl-, 1,1,3,3-Tetramethylbutyl-, Phenyl-, p-Tolyl-, Methoxi-, Ethoxi-, 2,2,2-Trifluorethoxi-, 1,1,3,3-Tetramethylbutoxi-, Phenoxi-, p-Methylphenoxi- oder Trimethylsilylreste.

Die Phthalocyanine können metallfrei vorliegen.

Sie können aber auch metallhaltig sein, d.h. das Phthalocyanin-Grundgerüst dient als Ligand für zwei- oder dreiwertige Metallkationen oder als Ligand für kationische, Metall enthaltende Gruppen.

Beispiele geeigneter Kationen oder Gruppen sind Magnesium-, Kalzium-, Titanyl-, Vanadinyl-, Niob-, Tantal-, Chrom-, Mangan-, Eisen-, Kobalt-, Nickel-, Palladium-, Platin-, Zink-, Cadmium-, Kupfer-, Zinn-, Blei-, Hydroxoaluminium-, Chloroaluminium- oder Dihydroxosiliciumkationen, wobei Titanyl- oder Vanadinylkationen besonders vorteilhaft sind.

Vorteilhaft sind die metallhaltigen Phthalocyanine.

Ganz besonders vorteilhafte erfindungsgemäße Phthalocyanine enhalten als Reste R 2,2,2-Trifluorethyl-, 1,1,3,3-Tetramethylbutyl-, Phenyl-, p-Toluyl-, Methoxi-, Ethoxi-, 2,2,2-Trifluorethoxi-, 1,1,3,3-Tetramethylbutoxi-, Phenoxi-, p-Methylphenoxi- oder Trimethylsilyl-Reste und als Kationen Titanyl- oder Vanadinylkationen.

Die Herstellung der erfindungsgemäßen Phthalocyanine erfordert keine besonderen Maßnahmen, sondern kann nach den üblichen und bekannten Methoden zur Synthese substituierter Phthalocyanine durchgeführt werden.

Hierzu werden im allgemeinen Gemische, welche im wesentlichen 50 bis 500 mol o-Phthalodinitril und 5 bis 100 mol eines mit einem Rest R substituierten o-Phthalodinitrils enthalten, gegebenenfalls in Gegenwart eines Metalloxids oder -halogenids eines der vorstehend genannten Metalle, während 2 bis 10 Stunden auf 200 bis 300°C erhitzt. Den Reaktionsmischungen können geeignete Stoffe wie Harnstoff oder Katalysatoren wie Ammoniummolybdate beigegeben werden.

Nach dem Erkalten werden die Rohprodukte mit Säuren, üblicherweise mit 10 %iger Salzsäure, und anschließend mit wäßrigen Laugen, beispielsweise mit 10 %igem Ammoniak, erhitzt, wobei die Verunreinigungen in Lösung gehen. Gegebenenfalls kann man die Rohprodukte hiernach mit Methanol ein weiteres Mal erhitzt. Die so erhaltenen Produkte werden üblicherweise getrocknet. Die Rohprodukte können aber auch in Schwefelsäure gelöst und so von den in ihnen enthaltenen in Schwefelsäure unlöslichen Verunreinigungen durch Filtrieren oder Zentrifugieren abgetrennt werden. Anschließend gießt man die schwefelsaure Produktlösung in Eiswasser, wobei die Produkte ausfallen. Die ausgefallenen Produkte werden filtriert oder zentrifugiert und so lange mit Wasser gewaschen, bis das Waschwasser neutral reagiert. Anschließend werden die Produkte getrocknet.

Aus den Produkten werden die Gemische aus mono- und disubstituierten Phthalocyaninen durch Extraktion mit Halogenkohlenwasserstoffen wie Methylenchlorid isoliert. Die Gemische können durch Säulenchromatographie in die entsprechenden mono- und disubstituierten Phthalocyanine aufgetrennt werden.

Die erfindungsgemäßen Phthalocyanine weisen sehr gute anwendungstechnische Eigenschaften auf und können daher zahlreichen Verwendungszwecken dienen. Insbesondere können sie für die Herstellung von IR-Schutzschichten, IR-absorbierenden Folien, Sonnenbrillenbeschichtungen, Beschichtungen für Autowindschutzscheiben, IR-Tinten, Druckfarben für IR-lesebare Streifencodes, Flüssigkristallanzeigen, IR-Sicherheitssystemen oder von elektrophotographischen Aufzeichnungsmaterialien verwendet werden. Ganz besonders gut geeignet sind sie für die Herstellung der erfindungsgemäßen flächenförmigen, mehrschichtigen, laseroptischen Aufzeichnungsmaterialien.

4

Wesentlicher Bestandteil der erfindungsgemäßen Aufzeichnungsmaterialien ist ihre thermisch veränderbare Aufzeichnungsschicht, welche die erfindungsgemäßen Phthalocyanine enthält.

Eine solche Aufzeichnungsschicht kann noch weitere geeignete Komponenten wie bekannte Farbstoffe oder Bindemittel enthalten.

Geeignete bekannte Farbstoffe, welche gemeinsam mit den erfindungsgemäßen Phthalocyaninen verwendet werden können, entstammen den Klassen der Azo-, der Perylen-, der Anthrachinon-, der Cyanin-, der Porphin-, der Tetrazaporphin-, der Hemiporphyrazin-, der Phthalocyanin- oder der Tetrathiolato-Metallkomplexfarbstoffe, wobei die bekannten Phthalocyanine gut geeignet sind.

Beispiele gut geeigneter bekannter Phthalocyanine sind metallfreies Phthalocyanin oder Kupfer-, Kobalt-, Titanyl, Chloroaluminium- oder Vanadinylphthalocyanin oder die aus der US-A-4 529 688, der US-A-4 492 750, der DE-A-29 51 340, der EP-A-0 013 453, der DE-A-3 446 418 oder der EP-A-0 186 404 bekannten Phthalocyanine.

Als Bindemittel kommen Polymerisate in Betracht, welche mit den farbstoffen und den erfindungsgemäßen Phthalocyaninen verträglich sind.

Beispiele geeigneter Bindemittel sind Polystyrole, Polyester, Polyacrylate, Polymethacrylate, Polycarbonate, Polyamine, Polyvinylalkohole, Polyvinylchloride, Copolymere von Vinylchlorid und Vinylacetat oder flüssigkristalline Seitengruppen enthaltende Polymerisate oder Copolymerisate gemäß der EP-A-00 90 282 oder der EP-A-01 71 045.

Darüber hinaus können die Aufzeichnungsschichten weitere geeignete Zusatzstoffe wie beispielsweise niedermolekulare flüssigkristalline Verbindungen enthalten.

Von Vorteil sind amorphe Aufzeichnungsschichten, welche aus den bekannten Farbstoffen und den erfindungsgemäßen Phthalocyaninen bestehen, wobei der Anteil der Phthalocyanine an den Schichten mindestens 20 Gew.% beträgt.

Dabei sind amorphe Aufzeichnungsschichten, welche aus den bekannten Phthalocyaninen und den erfindungsgemäßen Phthalocyaninen bestehen, von besonderem und solche, welche allein aus den erfindungsgemäßen Phthalocyaninen bestehen, von ganz besonderem Vorteil. Von diesen sind wiederum diejenigen hervorzuheben, welche aus den besonders vorteilhaften erfindungsgemäßen Phthalocyaninen bestehen.

Der Begriff "amorph" gibt an, daß das Material der Aufzeichnungsschichten keine kristallinen Bereiche aufweist, welche größer sind als die thermisch veränderten Bereiche, sondern in dieser Größenordnung optisch isotrop ist.

Im allgemeinen sind die Aufzeichnungsschichten 50 bis 160, vorzugsweise 80 bis 140 und insbesondere 100 bis 130 nm dick.

Ein weiterer wesentlicher Bestandteil der erfindungsgemäßen Aufzeichnungsmaterialien ist eine übliche und bekannte dimensionsstabile Trägerschicht aus Glas, Metall, Polymethylmethacrylat, Polycarbonat oder Polyethylenterephthalat, welche auch Spurrillen aufweisen kann. Dieser Träger kann die Form eines Bandes, einer quadratischen oder rechteckigen Platte oder einer runden Scheibe haben, wobei die für laseroptische Aufzeichnungsmaterialien üblichen und bekannten, optisch klaren Scheiben eines Durchmessers von 10 oder 13 cm bevorzugt werden.

Darüber hinaus können die Aufzeichnungsmaterialien weitere Schichten, wie Reflektorschichten, Schutzschichten, Haftschichten oder Elektrodenschichten aufweisen.

Vorteilhafte erfindungsgemäße Aufzeichnungsmaterialien bestehen aus einem Träger und einer amorphen Aufzeichnungsschicht aus den bekannten Farbstoffen und den erfindungsgemäßen Phthalocyaninen, besonders vorteilhafte bestehen aus einem Trägar und einer amorphen Aufzeichnungsschicht aus den bekannten Phthalocyaninen und den erfindungsgemäßen Phthalocyaninen und ganz besonders vorteilhafte bestehen aus einem Träger und einer amorphen Aufzeichnungsschicht aus den erfindungsgemäßen Phthalocyaninen.

Die Herstellung der erfindungsgemäßen Aufzeichnungsmaterialien erfordert keine besonderen verfahrenstechnischen Maßnahmen, sondern erfolgt nach der bekannten Methode zum Aufbringen dünner Phthalocyanin-Schichten auf Trägern durch Aufdampfen im Vakuum.

Die erfindungsgemäßen Aufzeichnungsmaterialien werden mittels eines Schreibleserstrahls mit analogen oder digitalen Daten beschrieben, wobei man zum Einschreiben analoger Daten bekanntermaßen einen analog modifizierten Dauerstrichlaser und zum Einschreiben digitaler Daten einen impulskodierten Laser verwendet.

Im allgemeinen weisen geeignete Laser bei der Schreibwellenlänge $\lambda$ eine Strahlleistung von 1 bis 20 mW auf. Der Fokus-Durchmesser des Schreiblaserstrahls liegt im allgemeinen bei 300 bis 2000 nm. Im allgemeinen beträgt die Impulsdauer bei der Bestrahlung mit einem impulscodierten Laser 10 bis 1000 ns. Vorteilhafterweise verwendet man zum Einschreiben einen Laserstrahl von Licht der Wellenlänge $\lambda$, welches

5

von der betreffenden Aufzeichnungsschicht gut absorbiert wird. Vorteilhaft sind Wellenlängen λ von 400 bis 1000 nm.

Beim Schreibvorgang wird der Laserstrahl in relativer Bewegung über das Aufzeichnungsmaterial hinweggeführt und trifft dabei senkrecht auf dieses auf, wobei er auf die Aufzeichnungsschicht fokussiert ist. An der Auftreffstelle wird die Aufzeichnungsschicht lokal erhitzt, und es entstehen thermisch veränderte Bereiche, beispielsweise in der Form von Löchern, Kratern oder Flecken. Beim Einschreiben von Daten mit impulskodierten Lasern haben diese Bereiche im wesentlichen eine runde oder ovale Form eines Durchmessers von 100 bis 2000 nm, beim Einschreiben mit einem analog modifizierten Dauerstrichlaser können sie beliebige Formen haben.

Die erfindungsgemäßen Aufzeichnungsmaterialien eignen sich ausgezeichnet für die ablative und die deformative laseroptische Datenaufzeichnung. Darüber hinaus eignen sie sich hervorragend für die laseroptische Datenaufzeichnung durch Phasenumwandlung. Hierbei werden die Daten in Form von thermisch veränderten Bereichen eingeschrieben, deren Reflektivität gegenüber den unbeschriebenen Bereichen außerordentlich erhöht ist, wodurch ein besonders starker optischer Kontrast erzielt wird.

Das Schreiben der Daten in die Aufzeichnungsschicht kann von der dem Träger abgewandten Seite der Schicht her oder durch den optisch klaren Träger hindurch erfolgen. Letzteres ist von besonderem Vorteil.

Die eingeschriebenen Daten werden mit Hilfe eines Leselaserstrahls gelesen. Die Strahlleistung des Leselasers bei der Lesewellenlänge λ' liegt unterhalb der Schwellenleistung, ab der ein Beschreiben möglich wird. Im allgemeinen liegt die Strahlleistung bei 0,1 bis 2 mW. Vorteilhafterweise verwendet man Laserlicht der Wellenlänge λ', welches von der Aufzeichnungsschicht stark reflektiert wird. Vorteilhaft sind Wellenlängen λ' von 400 bis 1000 nm, insbesondere 630 bis 900 nm.

Auch beim Lesevorgang wird der Leselaserstrahl in relativer Bewegung über das Aufzeichnungsmaterial hinweggeführt und trifft senkrecht auf dieses auf, wobei er auf die Aufzeichnungsschicht fokussiert ist.

Trifft der Leselaserstrahl beim Überstreichen der Aufzeichnungsschicht auf einen thermisch veränderten Bereich, beispielsweise einen Fleck, so ändern sich die Eigenschaften des vom Aufzeichnungsmaterial transmittierten oder reflektierten Lichts, was mit Hilfe geeigneter Detektoren nachgewiesen werden kann.

Dabei kann das Lesen der Daten in der Aufzeichnungsschicht und der dem Träger abgewandten Seite der Schicht her oder durch die optisch klaren, transparenten Träger hindurch erfolgen, wobei letzteres von Vorteil ist. Hierbei ist es besonders vorteilhaft, das reflektierte Licht zu erfassen.

Außerdem ist es von ganz besonderem Vorteil, hierzu Schreib- und Leselaser zu verwenden, welche Laserstrahlung im infraroten Wellenlängenbereich von 630 bis 900 nm ausstrahlen. Dabei ist es außerdem von Vorteil, wenn die Schreibwellenlänge λ mit der Lesewellenlänge λ' identisch ist oder sich nur wenig von ihr unterscheidet. Licht dieser Wellenlängen wird von üblichen und bekannten Halbleiter-Lasern geliefert.

Die erfindungsgemäßen Aufzeichnungsmaterialien werden somit in erfindungsgemäß bevorzugter Verfahrensweise mit impulskodiertem Laserlicht der Wellenlänge λ von 630 bis 900, insbesondere 740 bis 850 nm durch den optisch klaren, transparenten Träger hindurch beschrieben, wobei sich thermische veränderte Bereiche in Form von Flecken bilden, deren Reflektivität gegenüber den unbeschriebenen Bereichen stark erhöht ist.

Danach werden die beschriebenen Aufzeichnungsmaterialien in erfindungsgemäß bevorzugter Verfahrensweise mit Laserlicht der Wellenlänge λ' von 630 bis 900, insbesondere 740 bis 850 nm von der Seite des optisch klaren, transparenten Trägers her ausgelesen, wobei man das von der Aufzeichnungsschicht reflektierte Licht erfaßt.

Die erfindungsgemäßen Aufzeichnungsmaterialien weisen zahlreiche besondere Vorteile auf. So ist ihre unbeschriebene Aufzeichnungsschicht besonders stabil, so daß sie sich selbst nach langer Lagerzeit bei vergleichsweise hoher Temperatur- und Luftfeuchtigkeit noch immer hervorragend für die laseroptische Datenaufzeichnung eignet. Gleiches gilt für die beschriebene Aufzeichnungsschicht; hier tritt selbst bei sehr langer Lagerung kein Informationsverlust ein. Darüber hinaus eignet sich das Aufzeichnungsmaterial hervorragend für die laseroptische Datenaufzeichnung durch Phasenumwandlung. Hierbei reicht für das Einschreiben der Daten eine besonders niedrige Schreibleistung aus, was zu einer außerordentlich hohen Empfindlichkeit führt, welche sogar diejenige der bekannten Tellurschichten übertreffen kann. Es können daher auch Schreiblaser mit vergleichsweise geringer Lichtleistung verwendet werden. Außerdem weisen die beschriebenen Aufzeichnungsmaterialien einen ganz besonders hohen optischen Kontrast zwischen beschriebenen und unbeschriebenen Bereichen auf, welcher den bisher bekannten optischen Kontrast beschriebener Phthalocyaninschichten übertrifft. Des weiteren wird bei den erfindungsgemäßen Aufzeichnungsmaterialien eine Bitdichte von deutlich über $10^7$ bits/cm$^2$ erreicht, wobei die Daten dann auch noch unmittelbar nach dem Einschreiben gelesen werden können. Die erfindungsgemäßen Aufzeichnungsmaterialien eignen sich außerdem hervorragend für Archivzwecke.

Beispiele 1

Herstellung und Charakterisierung von erfindungsgemäßen Phthalocyaninen

Allgemeine Herstellvorschrift:

Gemische aus 250 mmol o-Phthalodinitril, 30 mmol eines mit einem Rest R in 3- oder 4-Stellung substituierten o-Phthalodinitrils und 62,5 mmol $TiO_2$, $TiCl_4$, $V_2O_5$ oder $VCl_3$ wurden während 2 Stunden auf 200°C und während 3 Stunden auf 300°C erhitzt. Nach dem Erkalten wurden die Rohprodukte mit jeweils 200 ml 10 %iger Salzsäure und anschließend nach dem Abtrennen der Salzsäure zunächst mit 200 ml 10 %igem Ammoniak und danach mit 200 ml Methanol erhitzt, wodurch die löslichen Verunreinigungen aus den Rohprodukten entfernt wurden.

Nach dem Trocknen wurden aus den so erhaltenen Produkten die Gemische aus mono- und disubstituierten Phthalocyaninen durch Extraktion mit Methylenchlorid isoliert.

Die Gemische wurden durch Säulenchromatographie an neutralem Aluminiumoxid (Aktivitätsstufe 3) mit dem Laufmittel Toluol, Toluol/Essigsäureethylester (Volumenverhältnis 9:1) oder Methylenchlorid in die entsprechenden mono- und disubstituierten Phthalocyanine aufgetrennt. Auf die weitere Auftrennung der disubstituierten Phthalocyanine in ihre Stellungsisomere wurde verzichtet.

Die stoffliche Zusammensetzung der so erhaltenen Phthalocyanine wurde durch die chemische Elementaranalyse und durch die Massenspektrometrie ermittelt und entsprach den berechneten Werten.

Die Phthalocyanine wurden anhand ihrer durch Dünnschichtchromatographie an Siliziumdioxid und/oder Aluminiumoxid ermittelten $R_f$-Werte charakterisiert. Die Tabelle 1 faßt die gefundenen $R_f$-Werte zusammen.

Tabelle 1: $R_f$-Werte mono- oder disubstituierter Phthalocyanine I:

| Beispiel Nr. | Rest R | Anzahl | Kation Me | $R_f$-Wert an | | | |
| | | | | $SiO_2$ a) | Laufmittel | $Al_2O_3$ b) | Laufmittel |
|---|---|---|---|---|---|---|---|
| 1.1 | 3-Si(CH₃)₃ | 1 | TiO²⊕ | 0,38 | A | 0,25 | A |
| 1.2 | 3-Si(CH₃)₃ | 2 | TiO²⊕ | 0,74 | A | 0,36 | A |
| 1.3 | 4-Si(CH₃)₃ | 1 | TiO²⊕ | 0,31 | B | 0,19 | B |
| 1.4 | 2-Si(CH₃)₃ | 1 | TiO²⊕ | 0,98 | B | 0,98 | B |
| 1.5 | 4-OCH₃ | 1 | VO³⊕ | 0,67 | B | 0,50 | B |
| 1.6 | 4-OCH₃ | 2 | VO³⊕ | 0,71 | B | 0,72 | B |
| 1.7 | 4-OCH₃ | 1 | VO³⊕ | 0,40 | C | 0,27 | C |
| 1.8 | 4-OCH₃ | 2 | VO³⊕ | 0,57 | C | 0,85 | C |
| 1.9 | 3-OC₂H₅ | 1 | VO³⊕ | 0,68 | B | 0,55 | B |
| 1.10 | 3-OC₂H₅ | 2 | VO³⊕ | 0,86 | B | - | |
| 1.11 | 4-OC₂H₅ | 1 | VO³⊕ | 0,55 | B | 0,68 | B |
| 1.12 | 3-OCH₂CF₃ | 1 | VO³⊕ | 0,62 | B | 0,57 | B |
| 1.13 | 3-OCH₂CF₃ | 1 | VO³⊕ | 0,62 | B | 0,57 | B |
| 1.14 | 3-OCH₂CF₃ | 1 | VO³⊕ | 0,78 | C | 0,92 | C |
| 1.15 | 4-OCH₂CF₃ | 1 | VO³⊕ | 0,21 | A | 0,27 | A |
| 1.16 | 4-(1,1,3,3-Tetra-methylbutyl) | 1 | VO³⊕ | - | | 0,42 | A |
| 1.17 | 4-(1,1,3,3-Tetra-methylbutyl) | 2 | VO³⊕ | - | | 0,72 | A |
| 1.18 | 3-p-Methylphenoxi | 1 | VO³⊕ | 0,07 | A | 0,07 | A |
| 1.19 | 3-p-Methylphenoxi | 2 | VO³⊕ | 0,21 | A | 0,16 | A |
| 1.20 | 3-p-Methylphenoxi | 1 | VO³⊕ | 0,69 | B | 0,48 | B |
| 1.21 | 3-p-Methylphenoxi | 1 | VO³⊕ | 0,86 | B | 0,80 | B |
| 1.22 | 3-Si(CH₃)₃ | 1 | VO³⊕ | 0,46 | A | 0,35 | A |
| 1.23 | 3-Si(CH₃)₃ | 2 | VO³⊕ | 0,73 | A | 0,57 | A |

Laufmittel A = Toluol;

Laufmittel B = Toluol/Ethylacetat im Volumenverhältnis von 9:1;

Laufmittel C = Toluol/Ethylacetat im Volumenverhältnis von 3:1;

a) Kieselgel der Firma Machery und Nagel, Polygram 0,2 mm N-HR UV 254;

Beispiel 2

Verwendung der erhaltenen Phthalocyanine zur Herstellung laseroptischer Aufzeichnungsmaterialien

Allgemeine Herstellvorschrift:

Die Phthalocyanine 1.1 bis 1.23 aus Tabelle 1 wurden in bekannter Weise unter staubfreien Bedingungen im Vakuum auf jeweils eine Oberfläche von optisch klaren, 1,2 mm dicken und 130 mm durchmessenden runden Scheiben aus Polycarbonat (Disks) aufgedampft. Die Aufdampfbedingungen wurden hierbei so gewählt, daß etwa 120 nm dicke Aufzeichnungsschichten entstehen sollten.

Die erhaltenen Aufzeichnungsmaterialien 1.1 bis 1.23 wiesen in der Tat ca. 120 nm dicke Aufzeichnungsschichten auf, wobei die Abweichungen von diesem gewünschten Wert sehr gering waren. In allen Fällen waren die Aufzeichnunsschichten über ihre gesamte Fläche hinweg gleichmäßig dick, rißfrei und amorph. Auch nach sechswöchiger Lagerung bei 60°C und einer relativen Luftfeuchtigkeit von 90 % änderten sich die Schichten nicht.

Die Reflektivität der Aufzeichnungsschichten der Aufzeichnungsmaterialien 1.1 bis 1.23 wurde von der Seite der Polycarbonatdisks her mittels Licht der Wellenlänge $\lambda$ = 780 nm in bekannter Weise gemessen. Dabei wurde bei jedem Aufzeichnungsmaterial die Reflektivität an 10 verschiedenen Stellen der Aufzeichnungsschicht ermittelt.

Es zeigte sich, daß bei einem gegebenen Aufzeichnungsmaterial die an den 10 verschiedenen Stellen gemessenen Reflektivitätswerte nicht voneinander abwichen, was auf die besonders hohe Gleichmäßigkeit der Aufzeichnungsschicht hinwies.

Darüber hinaus traten auch zwischen den einzelnen Aufzeichnungsmaterialien 1.1 bis 1.23 keine merklichen Abweichungen in der Reflektivität auf; sie lag generell zwischen 16 und 18 %. Somit waren alle Phthalocyanine 1.1 bis 1.23 aus Tabelle 1 hervorragend für die Herstellung laseroptischer Aufzeichnungsmaterialien geeignet.

Beispiel 3

Die laseroptische Datenaufzeichnung mittels der erfindungsgemäßen Aufzeichnungsmaterialien 1.1 bis 1.23 aus Beispiel 2

Versuchsvorschrift:

Zum Beschreiben und Lesen der Aufzeichnungsmaterialien wurde ein übliches und bekanntes Meßlaufwerk verwendet. Dieses wies
a) einen impulskodierten Schreiblaser, welcher Licht der Wellenlänge $\lambda$ = 830 nm mit einer maximalen Schreibleistung von 10 mW aussandte, und
b) einem Leselaser, welcher kontinuierlich Licht der Wellenlänge $\lambda'$ = 780 nm mit einer Leistung von 0,4 bis 1 mW emittierte,
auf. Außerdem wies das Meßlaufwerk optische Bauteile auf, mit deren Hilfe die parallelen Laserstrahlen der Laser (a) und (b) kolinear ausgerichtet wurden, um dann mit einem gemeinsamen Objektiv (NA = 0,5) durch die Polycarbonatdisks hindurch auf die Aufzeichnungsschichten fokussiert zu werden. Dadurch waren die Auftreffstellen der beiden Laserstrahlen nur um ca. 10 $\mu$m voneinander entfernt, so daß ein eingeschriebener Fleck infolge der Plattendrehung bereits wenige $\mu$s nach dem Einschreiben den Fokus des Leselasers (b) passierte und detektiert werden konnte.

Zwecks Detektion der Flecke wurde das von den Aufzeichnungsschichten durch die Polycarbonatdisks hindurch reflektierte Licht in üblicher und bekannter Weise erfaßt.

Alle Aufzeichnungsmateriaien 1.1 bis 1.23 wurden bei einer Spurgeschwindigkeit von 4 ms$^{-1}$ mittels des Schreiblasers (a) mit kontinuierlichen Pulszügen (1 MHz square ware; Dauer der Einzelpulse: 500 ns) beschrieben. Dabei wurde die Schreibleistung zwischen 1 und 10 mW variiert. Unmittelbar, d.h. wenige $\mu$s nach ihrer Aufzeichnung, wurden die erhaltenen Flecke gelesen. Hierbei wurde die Amplitude der durch die Flecke hervorgerufenen Pulse des reflektierten Leselaserlichts gemessen und als Funktion der Schreibleistung, mit welcher die betreffenden Flecke ursprünglich erzeugt worden waren, aufgezeichnet. In dieser Weise wurde ermittelt, ab welcher Schreibleistung unter den oben angegebenen Bedingungen einwandfreie Signale - die Grundvoraussetzung der Datenaufzeichnung - erhalten werden konnten. In allen Fällen war dies ab einer Schreibleistung von 2,5 mW möglich, was die hohe Empfindlichkeit der erfindungsgemäßen Aufzeichnungsmaterialien belegte.

9

Zusätzlich wurde die Reflektivität der Flecke für Licht der Wellenlänge $\lambda$ = 780 nm ermittelt. Diese lag bei allen untersuchten Aufzeichnungsmaterialien bei 30 %. Dies war eine deutliche Steigerung gegenüber der Reflektivität der unbeschriebenen Bereiche (16 bis 18 %) und bewirkte einen besonders hohen optischen Kontrast.

Die beschriebenen erfindungsgemäßen Aufzeichnungsmaterialien 1.1 bis 1.23 wurden zehn Wochen lang bei 60°C und einer relativen Luftfeuchtigkeit von 90 % gelagert. Dabei traten keine nachteiligen Veränderungen ein, sondern die aufgezeichneten Daten konnten nach wie vor fehlerfrei gelesen werden.

**Patentansprüche**

1. Metallhaltige oder metallfreie, mono- und disubstuierte Phthalocyanine, welche einen oder zwei der folgenden Reste R als Substituent an ihren Benzolkernen aufweisen:
   R = Cyan, $C_5$-$C_{20}$-Alkyl, $C_5$-$C_{10}$-Cycloalkyl, fluoriertes $C_1$-$C_6$-Alkyl, $C_6$-$C_{20}$-Aryl;
   $XR^1$,
   worin
   X Sauerstoff, Schwefel, Selen, Tellur oder NH und
   $R^1$ $C_1$-$C_6$-Alkyl, fluoriertes $C_1$-$C_6$-Alkyl oder $C_6$-$C_{20}$-Aryl bedeutet;
   wobei ein jeder substituierter Benzolkern stets nur mit einem Rest R substituiert ist.

2. Metallhaltige mono- oder disubstituierte Phthalocyanine nach Anspruch 1, in denen R gleich 2,2,2-Trifluorethyl, 1,1,3,3-Tetramethylbutyl, Phenyl, p-Tolyl, Methoxi, Ethoxi, 2,2,2-Trifluorethoxi, 1,1,3,3-Tetramethylbutoxi, Phenoxi oder p-Methylphenoxi ist und welche Vanadinyl- oder Titanylkationen enthalten.

3. Verwendung der Phthalocyanine gemäß den Ansprüchen 1 und 2 für die Herstellung von IR-Schutzschichten, IR-absorbierenden Folien, Sonnenbrillenbeschichtungen oder von Beschichtungen für Autowindschutzscheiben.

4. Verwendung der Phthalocyanine gemäß den Ansprüchen 1 und 2 für die Herstellung von IR-Tinten oder von Druckfarben für IR-lesbare Streifencodes.

5. Verwendung der Phthalocyanine gemäß den Ansprüchen 1 und 2 für die Herstellung von Flüssigkristallanzeigen.

6. Verwendung der Phthalocyanine gemäß den Ansprüchen 1 und 2 für, die Herstellung von IR-Sicherheitssystemen.

7. Verwendung der Phthalocyanine gemäß den Ansprüchen 1 und 2 für die Herstellung elektrophotographischer Aufzeichnungsmaterialien.

8. Verwendung der Phthalocyanine gemäß den Ansprüchen 1 und 2 für die Herstellung laseroptischer Aufzeichnungsmaterialien.

9. Flächenförmige, mehrschichtige, laseroptische Aufzeichnungsmaterialien, welche thermisch veränderbare Aufzeichnungsschichten aufweisen, die metallhaltige oder metallfreie, mono- und disubstituierte Phthalocyanine, welche einen oder zwei der folgenden Reste R als Substituent an ihren Benzolkernen aufweisen:
   R = Cyan, $C_5$-$C_{20}$-Alkyl, $C_5$-$C_{10}$-Cycloalkyl, fluoriertes $C_1$-$C_6$-Alkyl, $C_6$-$C_{20}$-Aryl;
   $XR^1$,
   worin
   X Sauerstoff, Schwefel, Selen, Tellur oder NH und
   $R^1$ $C_1$-$C_6$-Alkyl, fluoriertes $C_1$-$C_6$-Alkyl oder $C_6$-$C_{20}$-Aryl bedeutet;
   oder
   $Si(R^2)_3$,
   worin
   $R^2$ $C_1$-$C_6$-Alkyl bedeutet;
   wobei ein jeder substituierter Benzolkern stets nur mit einem Rest R substituiert ist, enthalten.

10. Verfahren zur laseroptische Datenaufzeichnung, bei dem die thermisch veränderbare, Farbstoffe enthaltende Aufzeichnungsschicht eines flächenförmigen, mehrschichtigen Aufzeichnungsmaterials mittels eines Schreiblaserstrahls mit analogen oder digitalen Daten in Form von thermisch veränderten Bereichen beschrieben wird, wonach die eingeschriebenen Daten mittels eines Leselaserstrahls gelesen werden, wobei man das von dem Aufzeichnungsmaterial transmittierte oder reflektierte Licht erfaßt, dadurch gekennzeichnet, daß man hierzu ein laseroptisches Aufzeichnungsmaterial gemäß Anspruch 9 verwendet.

11. Verfahren zur laseroptischen Datenaufzeichnung nach Anspruch 10, dadurch gekennzeichnet, daß man hierzu ein laseroptisches Aufzeichnungsmaterial gemäß Anspruch 9 verwendet, in dessen Aufzeichnungsschicht die Daten in Form von thermisch veränderten Bereichen eingeschrieben werden, welche eine andere Stoffmodifikation aufweisen als die unbeschriebenen Bereiche, und daß man beim Lesen der Daten das von der Schicht reflektierte Licht erfaßt.

## Claims

1. Metal-containing or metal-free, mono- and disubstituted phthalocyanines which have one or two of the following radicals R as substituent on their benzene rings:

   R =  cyano, $C_5$-$C_{20}$-alkyl, $C_5$-$C_{10}$-cycloalkyl, fluorinated $C_1$-$C_6$-alkyl, $C_6$-$C_{20}$-aryl;
   or $XR^1$,
   where
   X is oxygen, sulfur, selenium, tellurium or NH, and
   $R^1$ is $C_1$-$C_6$-alkyl, fluorinated $C_1$-$C_6$-alkyl or $C_6$-$C_{20}$-aryl;
   each substituted benzene ring being substituted by only one R.

2. Metal-containing mono- or disubstituted phthalocyanines according to claim 1 in which R is 2,2,2-trifluoroethyl, 1,1,3,3-tetramethylbutyl, phenyl, p-tolyl, methoxy, ethoxy, 2,2,2-trifluoroethoxy, 1,1,3,3-tetramethylbutoxy, phenoxy or p-methylphenoxy and which contain vanadinyl or titanyl cations.

3. The use of the phthalocyanines of claims 1 and 2 for producing IR screen layers, IR-absorbing films, coatings for sunglasses or coatings for automotive windscreens.

4. The use of the phthalocyanines of claims 1 and 2 for the production of IR inks or of printing inks for IR-readable bar codes.

5. The use of the phthalocyanines of claims 1 and 2 for producing liquid crystal displays.

6. The use of the phthalocyanines of claims 1 and 2 for producing IR security systems.

7. The use of the phthalocyanines of claims 1 and 2 for producing electrophotographic recording materials.

8. The use of the phthalocyanines of claims 1 and 2 for producing laser-optical recording materials.

9. Planar, multilayered, laser-optical recording materials comprising thermally alterable recording layers comprising metal-containing or metal-free, mono- and disubstituted phthalocyanines which have one or two of the following radicals R as substituent on their benzene rings:

   R =  cyano, $C_5$-$C_{20}$-alkyl, $C_5$-$C_{10}$-cycloalkyl, fluorinated $C_1$-$C_6$-alkyl, $C_6$-$C_{20}$-aryl;
   $XR^1$,
   where
   X is oxygen, sulfur, selenium, tellurium or NH, and
   $R^1$ is $C_1$-$C_6$-alkyl, fluorinated $C_1$-$C_6$-alkyl or $C_6$-$C_{20}$-aryl; or
   $Si(R^2)_3$,
   where
   $R^2$ is $C_1$-$C_6$-alkyl;
   each substituted benzene ring being substituted by only one R.

**10.** A process for laser-optical data recording whereby the thermally alterable, dye-containing recording layer of a planar, multilayered recording material is written to with analog or digital data in the form of thermally altered areas using a write laser beam, whereafter the written-in data can be read by means of a read laser beam by detecting the light transmitted or reflected by the recording material, characterized in that a laser-optical recording material according to claim 9 is used for this purpose.

**11.** A process for laser-optical data recording as claimed in claim 10, characterized in that there is used for it a laser-optical recording material according to claim 9 in whose recording layer the data are written in the form of thermally altered areas which comprise a different crystal form than the unwritten areas, and in that the data are read by detecting the light reflected by the layer.

## Revendications

**1.** Phtalocyanines monosubstituées et disubstituées, contenant des métaux ou dépourvues de métaux, qui présentent un ou deux des restes R suivants à titre de substituant(s) sur leurs noyaux benzéniques :

R représente un radical alkyle en $C_5$ à $C_{20}$, cycloalkyle en $C_5$ à $C_{10}$, alkyle en $C_1$ à $C_6$ fluoré, aryle en $C_6$ à $C_{20}$,

$XR^1$

où X représente un atome d'oxygène, de soufre de sélénium, de tellure, ou le radical NH et

$R^1$ représente un radical alkyle en $C_1$ à $C_6$, alkyle en $C_1$ à $C_6$ fluoré, ou aryle en $C_6$ à $C_{20}$,

où un de chaque noyau benzénique substitué n'est substitué que seulement par un reste R.

**2.** Phtalocyanines monosubstituées ou disubstituées, contenant des métaux, suivant la revendication 1, dans lesquelles R représente le radical 2,2,2-trifluoréthyle, 1,1,3,3-tétraméthylbutyle, phényle, p-tolyle, méthoxy, éthoxy, 2,2,2-trifluoréthoxy, 1,1,3,3-tétraméthylbutoxy, phénoxy ou p-méthylphénoxy et qui contiennent des cations vanadinyle ou titanyle.

**3.** Utilisation des phtalocyanines suivant les revendications 1 et 2 pour la confection de couches de protection contre les rayons IR, de feuilles absorbant les rayons IR, de revêtements pour lunettes solaires, ou de revêtements pour des pare-brise de véhicules automobiles.

**4.** Utilisation des phtalocyanines suivant les revendications 1 et 2 pour la confection d'encres pour rayons IR, ou d'encres d'impression pour codes-barres lisibles par les rayons IR.

**5.** Utilisation des phtalocyanines suivant les revendications 1 et 2 pour la confection d'affichages ou de visuels à cristaux liquides.

**6.** Utilisation des phtalocyanines suivant les revendications 1 et 2 pour la confection de systèmes de sécurité à rayons IR.

**7.** Utilisation des phtalocyanines suivant les revendications 1 et 2 pour la confection de matériaux d'enregistrement ou de mémorisation électrophotographiques.

**8.** Utilisation des phtalocyanines suivant les revendications 1 et 2 pour la confection de matériaux d'enregistrement ou de mémorisation laseroptiques.

**9.** Matériaux d'enregistrement ou de mémorisation laseroptiques, multicouche, de forme plane, qui présentent des couches d'enregistrement ou de mémorisation thermomodifiables, qui contiennent des phtalocyanines monosubstituées et disubstituées, contenant des métaux ou dépourvue de métaux, qui présentent un ou deux des restes R suivants à titre de substituant(s) sur leurs noyaux benzéniques :

R représente un radical alkyle en $C_5$ à $C_{20}$, cycloalkyle en $C_5$ à $C_{10}$, alkyle en $C_1$ à $C_6$ fluoré, aryle en $C_6$ à $C_{20}$,

$XR^1$

où X représente un atome d'oxygène, de soufre de sélénium, de tellure, ou le radical NH et

$R^1$ représente un radical alkyle en $C_1$ à $C_6$, alkyle en $C_1$ à $C_6$ fluoré, ou aryle en $C_6$ à $C_{20}$,

ou

$Si(R^2)_3$,

dans lequel $R^2$ représente un radical alkyle en $C_1$ à $C_6$

où un de chaque noyau benzénique substitué n'est substitué que seulement par un reste R.

10. Procédé pour l'enregistrement ou la mémorisation de données laseroptiques, conformément auquel la couche d'enregistrement ou de mémorisation contenant des colorants, thermomodifiable, d'un matériau d'enregistrement ou de mémorisation multicouche, de forme plane, subit une inscription à l'aide d'un rayon laser d'écriture avec des données analogiques ou numériques sous forme de zones ou plages thermomodifiées, opération après laquelle les données inscrites sont lues à l'aide d'un rayon laser de lecture, où on détecte la lumière transmise ou réfléchie par le matériau d'enregistrement ou de mémorisation, caractérisé en ce que l'on utilise à cette fin un matériau d'enregistrement ou de mémorisation laseroptique suivant la revendication 9.

11. Procédé pour l'enregistrement ou la mémorisation de données laseroptiques suivant la revendication 10, caractérisé en ce que l'on utilise à cette fin, un matériau d'enregistrement ou de mémorisation laseroptique suivant la revendication 9, dans la couche d'enregistrement ou de mémorisation duquel on inscrit les données sous forme de zones thermomodifiées, qui présentent une autre modification de matière ou de substance que les zones ne portant pas d'inscription et on détecte la lumière réfléchie à partir de la couche lors de la lecture des données.